# EUROPÄISCHE PATENTSCHRIFT

(11) **EP 3 689 796 B1**
(45) Veröffentlichungstag und Bekanntmachung des Hinweises auf die Patenterteilung: **03.01.2024**
(21) Anmeldenummer: 20155093.6
(22) Anmeldetag: 03.02.2020
(51) Int. Cl.: B65G 47/84

(54) **LAUFROLLEN MIT VORSPANNUNG BEI MECHANISCHER KURVENFÜHRUNG**
CASTORS WITH PRETENSIONING WITH MECHANICAL CURVE
GALETS DE ROULEMENT À PRÉCONTRAINTE POUR GLISSIÈRES EN COURBE MÉCANIQUE

(30) Priorität: 01.02.2019 DE 102019102538
(43) Veröffentlichungstag der Anmeldung: 05.08.2020
(73) Patentinhaber: Krones AG, 93073 Neutraubling (DE)
(72) Erfinder: Effenberger, Harald, 93073 Neutraubling (DE); Höllriegl, Thomas, 93073 Neutraubling (DE)
(74) Vertreter: Hannke Bittner & Partner mbB Regensburg

(56) Entgegenhaltungen:
- DE-A1- 3 528 592
- DE-A1- 4 127 702
- DE-A1- 4 306 110
- DE-C1- 4 010 601

## Beschreibung

Die vorliegende Erfindung bezieht sich auf eine Vorrichtung und ein Verfahren zum Behandeln von Behältnissen, wobei die Vorrichtung eine Transporteinrichtung aufweist, welche derart ausgebildet ist, dass eine spielfreie Kurvenführung realisiert wird.

Aus dem internen Stand der Technik der Anmelderin ist es bekannt, dass bei Kurvenlaufbahnführungen meist zwei übereinander angeordnete Laufrollen in einer Nut beispielsweise einer Nutkurve geführt werden. Diese Laufrollen beziehungsweise allgemein die Rollen sind dabei auf einer Achse befestigt und darüber hinaus axial aufeinander ausgerichtet. Dabei sind aus dem internen Stand der Technik einige Nachteile bekannt. So ist es beispielsweise bekannt, dass aufgrund von Verschleiß an dem Außendurchmesser der Laufrolle oder durch Abnutzung der Kurvenlaufbahn sich ein Spiel in der Führung beziehungsweise der Kurve vergrößert. Dies führt dazu, dass die Genauigkeit und auch die Laufeigenschaften stark beeinflusst werden beziehungsweise sich die Genauigkeit und die Laufeigenschaften verschlechtern. Weiter wurde seitens der Anmelderin festgestellt, dass sich ein derartiges Spiel negativ auf den Rollenverschleiß auswirkt und diesen auch exponentiell ansteigen lässt.

Des Weiteren können durch das größer werdende Spiel zusätzliche spontane Krafteinwirkungen, sogenannte Kraftspitzen, auftreten, welche von der Mechanik zusätzlich aufgenommen werden müssen. Diese Kraftspitzen können beispielsweise zu einem Verschleiß der Mechanik beitragen. Auch müssen demzufolge die Rollen oft getauscht werden, um die Genauigkeit und eine gewisse Laufruhe gewährleisten beziehungsweise sicherstellen zu können. Ein derartiger Austausch kann üblicherweise nur bei einem Stillstand der Maschine beziehungsweise Vorrichtung durchgeführt werden, was zu einem Stillstand beispielsweise einem Produktionsstillstand führt.

Weiter ist es aus dem internen Stand der Technik der Anmelderin bekannt, dass bei manchen Anwendungen die Laufrollen über eine dezentrale Mechanik zusätzlich angefedert werden können. Eine derartige Vorgehensweise ist jedoch bei den üblichen beengten Bauräumen meist nicht möglich.

Die DE 40 10 601 C1 zeigt ebenfalls eine solche Federung von Laufrollen und offenbart den Oberbegriff des Anspruchs 1.

Der vorliegenden Erfindung liegt die Aufgabe zugrunde die Nachteile aus dem Stand der Technik zu überwinden und eine Vorrichtung und ein Verfahren bereitzustellen, womit ein sich vergrößerndes Spiel zwischen einer Laufrolle und einer Führungskurve verhindert werden kann. Weiter soll mit der vorliegenden Erfindung eine beständige Genauigkeit der Führung und auch eine höhere Laufruhe erzielt und der Verschleiß der Laufrollen reduziert werden.

Diese Aufgabe wird erfindungsgemäß durch den Gegenstand der unabhängigen Ansprüche 1 sowie 9 gelöst. Vorteilhafte Ausführungsformen und Weiterbildungen der Erfindung sind Gegenstand der Unteransprüche.

Eine erfindungsgemäße Vorrichtung zum Behandeln von Behältnissen weist eine Transporteinheit bzw. eine Transporteinrichtung auf, welche dazu geeignet und bestimmt ist die Behältnisse entlang eines vorgegebenen Transportpfades zu transportieren. Die Transporteinheit weist wenigstens eine Kurvenlaufbahnführung auf, welche sich wenigstens abschnittsweise entlang des Transportpfades der Behältnisse erstreckt. Weiter weist die Vorrichtung wenigstens eine Führungsrolle auf, welche dazu geeignet und dazu bestimmt ist, an einer Lauffläche der Kurvenlaufbahnführung abzurollen. Die Führungsrolle ist dabei drehbar an einem Rollenträger angeordnet.

Erfindungsgemäß ist die Führungsrolle mittels einer Vorspanneinrichtung gegenüber dem Rollenträger derart vorgespannt, dass die Führungsrolle in Richtung der Lauffläche gedrängt wird.

Bevorzugt ist der Rollenträger mechanisch mit einem Betätigungselement der Vorrichtung gekoppelt. Das Betätigungselement führt dabei eine Bewegung aus, welche vorteilhaft in einem von 0° verschiedenen Winkel bezüglich des Transportpfades verläuft, beispielsweise in einem Winkel von 90°. Die Bewegung wird dabei durch die Führungsrolle verursacht beziehungsweise eingeleitet.

Bei den zu behandelnden Behältnissen kann es sich beispielsweise um Kunststoffbehältnisse, wie Kunststoffflaschen oder Kunststoffvorformlinge oder Glasbehältnisse, wie beispielsweise Glasflaschen aber auch um Kartons und der dergleichen handeln. Die Vorrichtung zum Behandeln von Behältnissen ist dabei vorteilhaft aus einer Gruppe von Vorrichtungen ausgewählt, welche Heizeinrichtungen, Vorrichtungen zum Umformen von Kunststoffvorformlingen zu Kunststoffbehältnissen, Etikettiereinrichtungen, Sterilisationseinrichtungen, Fülleinrichtungen, Verschließeinrichtungen und dergleichen enthält. Allgemein kann die erfindungsgemäße Vorrichtung bevorzugt eine Anlage der Verpackungsindustrie sein.

Die Kurvenlaufbahnführung erstreckt sich vorteilhaft entlang des gesamten Führungspfades genauer gesagt entlang des gesamten Transportpfades der Behältnisse.

In einer bevorzugten Ausführungsform wird durch die Vorspannung ein entstehendes und/oder gegebenes Spiel zwischen der Lauffläche und der Führungsrolle ausgeglichen. Dieses Spiel kann dabei durch eine Abnutzung der Laufrolle beziehungsweise Führungsrolle entstehen. Durch diese Abnutzung kann beispielsweise ein Außendurchmesser einer Laufrolle kleiner werden, was zu einem größeren Spiel zwischen der Laufrolle und einer Lauffläche führen würde.

Darüber hinaus kann sich das Spiel zwischen der Führungsrolle und der Lauffläche auch aufgrund von Abweichungen in der Kurvenlaufbahn ergeben. Diese Abweichungen können dabei beispielsweise nur bereichsweise auftreten beispielsweise in Bereichen einer Kurve, beziehungsweise allgemein gesagt in Bereichen, in welchen eine Richtungsänderung vorgegeben wird.

Auch kann sich das Spiel aufgrund von extremen Lastwechseln vergrößern. Dieses entstehende Spiel wird jedoch durch die Vorspanneinrichtung, welche die Führungsrolle in Richtung der Lauffläche drängt, ausgeglichen.

Dieser Ausgleich wird dabei bevorzugt kontinuierlich und/oder dynamisch ausgeführt. Somit wird kontinuierlich auf die jeweiligen vorliegenden Gegebenheiten reagiert. Beispielsweise kann in einem Bereich der Transporteinheit ein prinzipiell größeres Spiel vorliegen und in einem anderen Bereich ein kleines Spiel. Aufgrund der vorgeschlagenen Vorspannung kann die Führungsrolle somit sowohl an das größere Spiel als auch an das kleinere Spiel dynamisch angepasst werden, ohne dass hierfür eine externe Einstellung oder Verstellung der Führungsrolle beispielsweise durch einen Anlagenbediener erfolgen muss.

Weiter können durch die Vorspannung der Verschleiß der Führungsrolle beispielsweise im Hinblick auf den Außendurchmesser, auftretende Kurvenlaufbahnabweichungen oder extreme Lastwechsel beispielsweise aufgrund von Bewegungsrichtungsänderungen oder Beschleunigungen kompensiert werden.

In einer bevorzugten Ausführungsform weist die Kurvenlaufbahnführung eine Nutkurve auf, innerhalb derer die Führungsrolle geführt wird. Die Nutkurve kann dabei beispielsweise von drei Seiten geschlossen sein. Bevorzugt bildet die Nutkurve die Lauffläche aus, auf welcher die Führungsrolle abrollt. Diese Lauffläche kann dabei beispielsweise durch eine Wandung der Nutkurve bereitgestellt werden.

Bevorzugt ist die Breite der Nut beziehungsweise der Nutkurve geringförmig größer als ein Außendurchmesser der Rolle beziehungswiese Führungsrolle. So kann ein möglichst reibfreies Abrollen der Führungsrolle in der Nutkurve ermöglicht werden. Somit ist auf Grund der Bauweise ein geringes Spiel zwischen der Führungsrolle und der Nutkurve gegeben. Dieses Spiel kann jedoch wie bereits zuvor beschrieben beispielsweise aufgrund von Abnutzung der Laufrolle, was einen kleiner werdenden Außendurchmesser zur Folge hat, größer werden.

Weiter wird, wie bereits beschrieben, dieses größer werdende Spiel aufgrund der Vorspannung ausgeglichen. Bevorzugt weist die Vorrichtung somit wenigstens eine Laufrolle auf, welche entlang einer Kurvenlaufbahn und genauer gesagt entlang einer Nutkurve geführt wird.

Bei einer weiteren vorteilhaften Ausführungsform weist die Vorrichtung wenigstens zwei übereinander drehbar gegenüber an dem Rollenträger angeordnete Führungsrollen auf. Diese wenigstens zwei übereinander angeordneten Führungsrollen können dabei beispielsweise direkt aneinander anliegen, sodass beispielsweise die Führungsrollen direkten Kontakt zueinander haben und auf der jeweiligen anderen bzw. gegenüberliegenden Außenoberfläche abrollen.

Weiter bevorzugt wäre es jedoch möglich, dass die Nutkurve mehrreihig beispielsweise zweireihig ausgebildet ist, sodass jede Führungsrolle in einer eigenen Nutkurve geführt wird. Bei einer derartigen mehrreihigen Nutkurve sind die einzelnen Nutkurven bevorzugt übereinander angeordnet, sodass auch die Führungsrollen übereinander angeordnet sind. Weiter bevorzugt sind die Führungsrollen unabhängig voneinander gegenüber dem Träger beispielsweise dem Rollenträger drehbar. Die Führungsrollen sind somit bevorzugt nicht miteinander gekoppelt, sondern vielmehr entkoppelt voneinander. So könnten sich die Führungsrollen beispielsweise mit unterschiedlichen Geschwindigkeiten drehen. Bevorzugt sind die Laufrollen an dem Rollenträger beispielsweise auf einer Achse befestigt und beispielsweise axial aufeinander ausgerichtet. Darüber hinaus wäre jedoch auch eine gekoppelte Ausführungsform der Laufrollen zueinander durchaus denkbar.

Bevorzugt sind die Führungsrollen mittels einer Lagereinrichtung drehbar gegenüber dem Rollenträger gelagert. Als Lagereinrichtung kann beispielsweise ein Wälzlager vorgesehen sein, welches besonders bevorzugt einen Lagerinnenring, eine Lageraußenring und eine Vielzahl von Wälzkörpern zwischen diesen Lagerringen aufweist.

Erfindungsgemäss ist die Vorspanneinrichtung direkt in einer Befestigungsachse (bzw. Trägerachse) integriert. Die Befestigungsachse ist dabei die zuvor erwähnte Achse, mit welcher die Führungsrolle an dem Rollenträger befestigt ist. Dabei ist die Vorspanneinrichtung innerhalb eines Lagerinnenrings der Rolleneinrichtung beziehungsweise der Laufrollen angeordnet beziehungsweise integriert. Durch eine derartige Ausgestaltung kann eine besonders kompakte Ausgestaltung beziehungsweise Bauweise realisiert werden.

Dies führt dazu, dass die Vorspannung der Rollen in den Nutkurven auch bei Mechaniken mit sehr beengten Bauräumen und hoch dynamischen Anwendungen verwendet beziehungsweise realisiert werden kann. Darüber hinaus wäre es durch die kompakte Bauweise durchaus möglich, eine derartige Vorspannung nachträglich in einem bereits bestehenden System beziehungsweise einer bestehenden Vorrichtung zu integrieren.

In einer weiteren bevorzugten Ausführungsform ist wenigstens eine Laufrolle bzw. Führungsrolle vorgespannt und wenigstens eine Laufrolle bzw. Führungsrolle starr ausgebildet. Bevorzugt ist dabei wenigstens eine vorgespannte Laufrolle auf einer starren Laufrolle angeordnet. Hierunter wird insbesondere verstanden, dass diese beiden Laufrollen bzw. Führungsrollen entlang deren Träger nebeneinander angeordnet sind. Es wäre jedoch auch denkbar, dass die beiden Führungsrollen derart nebeneinander angeordnet sind, dass auch deren Drehachsen versetzt zueinander, bevorzugt jedoch auch parallel zueinander sind.

Beispielsweise könnten an einem Rollenträger zwei Laufrollen übereinander angeordnet sein, wobei hierbei beispielsweise die untere der beiden Rollen starr ausgebildet ist und oberhalb dieser starren Rolle die vorgespannte Laufrolle angeordnet ist. Unter einer starren Ausbildung der Führungsrolle wird dabei verstanden, dass diese sich zwar gegenüber dem Träger drehen kann, aber nicht in einer radialen Richtung gegenüber dem Träger bewegbar ist.

Dabei kann auch hierbei wieder beispielsweise ein Spalt zwischen diesen Laufrollen bzw. Führungsrollen angeordnet sein, durch welchen sich beispielsweise die Lauffläche, gegen welche beispielsweise die vorgespannte Laufrolle gedrängt wird, erstreckt. Bevorzugt können diese Laufrollen jedoch auch direkt übereinander angeordnet sein.

Weiter bevorzugt können an einem Rollenträger beispielsweise auch beidseitig Laufrollen angeordnet sein. So könnte ein Rollenträger beispielsweise symmetrisch ausgebildet sein, sodass dieser beispielweise vier Laufrollen aufweist beziehungsweise vier Laufrollen an diesem Rollenträger angeordnet sind, wobei auch hier wieder jeweils zwei Laufrollen übereinander angeordnet und axial aufeinander ausgerichtet sind. Dieser Sachverhalt ergibt sich anhand der beigefügten Zeichnungen genauer.

Wie bereits zuvor erwähnt wird durch die Vorspannung wenigstens einer Laufrolle eine spielfreie Kurvenführung realisiert. Somit kann ein Laufrollenverschleiß und eventuelle Ungenauigkeiten der Kurvenlaufbahn und der Lagegenauigkeit der Laufrolle und der Kurvenlaufbahn zueinander kompensiert werden. Somit ergibt sich insgesamt eine höhere Laufruhe, wodurch auch beispielsweise höhere Systemleistungen erzielt werden können.

Bei einer weiteren vorteilhaften Ausführungsform wird die Vorspannung der Laufrolle mittels wenigstens einer Feder erreicht und/oder die Vorspannung der Laufrolle wird mittels wenigstens einem elastischen Element, welches sich von einer Feder unterscheidet, erreicht, wobei das elastische Element bevorzugt ein Elastomer ist.

Andere elastische Elemente sind jedoch nicht ausgeschlossen, solange diese vorteilhaft formfeste aber elastisch verformbare Eigenschaften aufweisen.

Bevorzugt ist beispielsweise die Feder innen angeordnet. Dies bedeutet, dass die Feder beispielsweise zwischen einem Rollenträger und der Laufrolle angeordnet ist. Eine derartige Ausgestaltung kann dabei auch mit dem elastischen Element beispielsweise des Elastomers umgesetzt werden. Weiter wäre es durchaus denkbar, dass das elastische Element (sowohl die Feder als auch das elastische Element, welches sich von einer Feder unterscheidet), zwischen einer Lagerachse und dem Rollenlager-Innenring angeordnet ist.

In einer weiteren vorteilhaften Ausführungsform stehen die Laufrollen im ständigen Kontakt mit der Kurvenlaufbahn. Die Laufrollen stehen im ständigen Kontakt mit der Kurvenlaufbahn beziehungsweise mit einer Wandung der Nutkurve, da diese aufgrund der Vorspannung kontinuierlich in Richtung dieser Kurvenlaufbahn gedrückt werden. Die Vorspannung bewirkt, dass die Laufrollen nicht von der Kurvenlaufbahn abheben können, dies hat wiederum den Vorteil, dass die Laufrollen nicht stehen bleiben können, was beispielsweise aufgrund eines Abhebens der Laufrolle von der Kurvenlaufbahn passieren kann.

Weiter müssen die Laufrollen, da diese nicht stehen bleiben, nicht neu beschleunigt werden. Dies hat zur Folge, dass hierbei der Verschleiß der Laufrollen reduziert wird beziehungsweise weiter minimiert wird, da die Rollen nicht ständig neu beschleunigt werden müssen oder diese nicht nur über die Kurvenlaufbahn gezogen werden. Dies wirkt sich darüber hinaus positiv auf eine längere Lebensdauer der Laufrollen aus, wodurch auch beispielsweise mögliche Wartungsintervalle verlängert werden können.

Weiter kann aufgrund des ständigen Kontakts zwischen der wenigstens einen Laufrolle und der Kurvenlaufbahn ein besseres Laufverhalten realisiert werden. Dies liegt daran, dass die Laufrollen kontinuierlich an der Lauffläche anliegen und dynamisch an die aktuellen und sich möglicherweise verändernden Gegebenheiten angepasst werden. Die Vorspannung trägt daher auch dazu bei, dass allgemein eine höhere Systemleistung umgesetzt beziehungsweise betrieben werden kann.

Die vorliegende Erfindung ist weiterhin auf ein Verfahren zum Behandeln von Behältnissen gemäss Anspruch 9 gerichtet.

Dadurch, dass die Vorspannung beziehungsweise die Anfederung der Laufrollen in den Nutkurven, direkt in der Befestigungsachse der Laufrollen integriert werden kann, kann die erfindungsgemäße Vorrichtung beziehungsweise das Verfahren bei Mechaniken mit sehr beengten Bauräumen und hoch dynamischen Anwendungen einfach verwendet werden. Weiter kann bei einem Verschleiß des Rollenaußendurchmessers, oder bei Kurvenlaufbahnabweichungen oder extremen Lastwechseln das entstehende Spiel der Führungselemente über das vorgespannte Element ständig im Lauf dynamisch ausgeglichen werden. Dadurch bleibt das System spielfrei und positionier genau.

Es wird darauf hingewiesen, dass im Rahmen der vorliegenden Anmeldung die Begriffe Laufrolle und Führungsrolle synonym verwendet werden.

Ein unkontrolliertes schlagen der Mechanik wird vermieden. Dies wirkt sich positiv auf eine längere Lebensdauer der Laufrollen und Kurvenlaufbahn aus, da die Laufrolle ständig an die Kurvenlaufbahn angedrückt wird und somit der Kontakt zwischen Laufrolle und Kurvenlaufbahn bestehen bleibt. Somit können die Laufrollen nicht abheben und eventuell stehen bleiben, auch müssen die Laufrollen nicht neu beschleunigt werden. Darüber hinaus kann durch diese Vorspannung beziehungsweise diese Anfederung der Laufrollen ein insgesamt besseres Laufverhalten und höhere Systemleistungen erzielt werden.

Weitere Vorteile und Ausführungsformen ergeben sich aus den beigefügten Zeichnungen. Darin zeigen:
- Figur 1: eine grob schematische Darstellung einer möglichen Ausgestaltung einer Vorrichtung zum Behandeln von Behältnissen
- Figur 2: eine schematische Darstellung einer erfindungsgemäßen Vorspanneinrichtung in einer ersten Alternative
- Figur 3: eine weitere schematische Darstellung einer erfindungsgemäßen Vorspanneinrichtung in einer weiteren Alternative

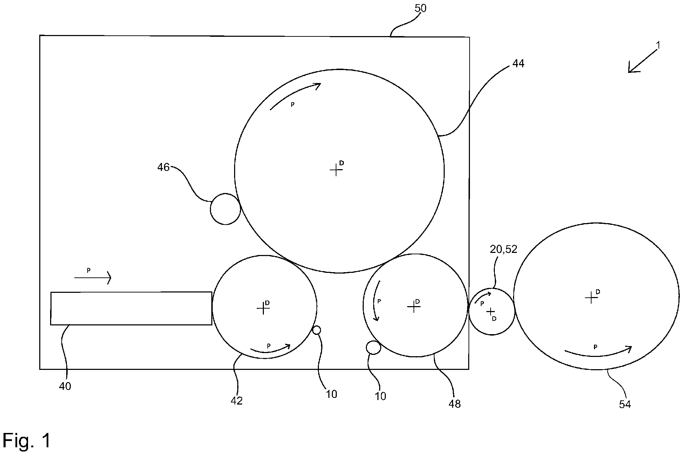

Die Figur 1 zeigt eine grob schematische Darstellung einer möglichen Ausgestaltung einer Vorrichtung 1 zum Behandeln von Behältnissen 10. Die Vorrichtung 1 weist dabei beispielsweise eine Transporteinrichtung 20 auf welche die Behältnisse 10 entlang des Transportpfades P transportiert. Hierbei sei angemerkt, dass aus Gründen der Übersichtlichkeit lediglich einmal das Bezugszeichen 20 bei der Übergabeeinheit 52 vergeben wurde. Der Transportpfad P erstreckt sich jedoch, wie gezeigt, durch die gesamte Vorrichtung 1.

Weiter weist die Vorrichtung 1 eine Erwärmungseinrichtung 40 auf, welche die Behältnisse erwärmt. Von der Erwärmungseinrichtung 40 werden die Behältnisse 10, bei welchen es sich hierbei beispielsweise um Kunststoffvorformlinge handeln kann, von einer Zuführeinheit 42 übernommen und an eine Umformungseinrichtung 44 transportiert.

Bei dieser Umformungseinrichtung 44 kann es sich beispielsweise um eine Blasmaschine handeln, welche die Kunststoffvorformlinge mittels Umformungseinheiten 46 zu Kunststoffbehältnissen umformt. Von dieser Umformungseinrichtung 44 werden die nun geformten Behältnisse 10 von einer Abführeinrichtung 48 abtransportiert und beispielsweise an eine Übergabeeinrichtung 52, welche hier beispielsweise als Teilungsverzugsstern 52 ausgebildet sein könnte an eine weitere Behandlungseinrichtung beispielsweise eine Etikettiereinrichtung 54 übergeben.

Weiter erkennt man, dass beispielsweise die Zuführeinrichtung 42, die Umformungseinrichtung 44, die Abführeinrichtung 48, die Übergabeeinrichtung 52 und die Fülleinrichtung oder Etikettiereinrichtung 54 jeweils um eine Drehachse D drehbar gelagert sind. Die Einrichtungen 40, 42, 44 und 48 sind hierbei darüber hinaus bevorzugt von einem Reinraum 50 umgeben, sodass hier die jeweilige Behandlung der Behältnisse 10 unter aseptischen Bedingungen ausgeführt werden kann.

Es wird jedoch ausdrücklich darauf hingewiesen, dass es sich bei der in Figur 1 aufgezeigten Vorrichtung 1 zum Behandeln von Behältnissen 10 lediglich um einen beispielhaften Aufbau handelt. Beispielsweise könnten auch einige Einrichtungen weggelassen werden, wie beispielsweise die Abführeinrichtung 48, sodass die Umformungseinrichtung 44 die Behältnisse 10 gleich an eine Übergabeeinrichtung 52 übergibt. Auch könnte sich beispielsweise der Reinraum in anderer Art und Weise erstrecken, sodass beispielsweise lediglich der Transportpfad P von diesem eingehaust ist oder die Vorrichtung könnte ohne einen Reinraum ausgebildet sein. Die oben genannten Vorrichtungen wie etwa die Umformungseinrichtungen weisen ebenfalls bevorzugt entsprechende Transporteinrichtungen auf.

Weiter wird ausdrücklich daraufhin gewiesen, dass sich die Transporteinrichtung 20 auch an sämtlichen Einrichtungen befinden kann oder auch lediglich an einer anderen. All diese möglichen Ausgestaltungen sind dabei denkbar, ohne, dass der Schutzbereich dieser Anmeldung verlassen wird.

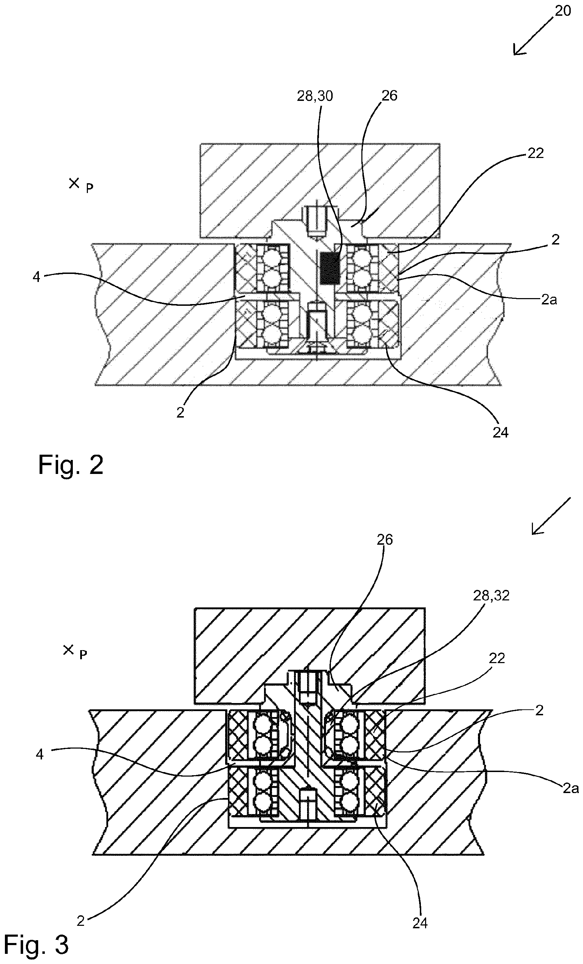

Figur 2 zeigt eine erste Darstellung einer erfindungsgemäßen Vorspanneinrichtung 28 in einer ersten Alternative. Dabei ist die Transporteinrichtung 20 zu erkennen, wobei hier der Transportpfad P in die Zeichenebene hinein verläuft. Der Rollenträger 26 trägt gemäß dieser Ausführungsform beispielsweise zwei Laufrollen 22, 24. Die Laufrolle 22 ist hier über die Vorspanneinrichtung 28, welche als Feder 30 ausgeführt ist, vorgespannt und wird somit in Richtung der Lauffläche 2a gedrängt. Die Transporteinheit 20 weist darüber hinaus zwei Kurvenlaufbahnen 2 auf, welche die Nutkurven 4 bilden, in welchen die Laufrollen 22 und 24 angeordnet sind. Die Laufrolle 24 ist dabei nicht vorgespannt und somit starr ausgebildet.

Allgemein ist der Figur 2 zu entnehmen, dass der Rollenträger symmetrisch aufgebaut ist, sodass dieser hier beispielsweise vier Laufrollen aufweist. Dabei können beispielsweise die oberen Laufrollen 22 vorgespannt und die unteren Laufrollen 24 starr ausgebildet sein, die jeweils auf einer eigenen Kurvenbahnführung laufen. Alternativ könnte beispielsweise auch die untere Laufrolle 22 vorgespannt und die obere Laufrolle 24 starr ausgebildet sein. Ebenso ist zu erkennen, dass die Laufrollen 22, 24 an einer Achse (nicht gezeigt) befestigt und axial übereinander ausgerichtet sind.

Figur 3 zeigt eine weitere Darstellung einer erfindungsgemäßen Vorspanneinrichtung 28 in einer weiteren Alternative. Diese Darstellung weicht von der in Figur 2 gezeigten Alternative dadurch ab, dass hier die Vorspanneinrichtung 28 nicht als Feder, sondern als elastisches Element 32 beispielsweise als Elastomer 32 ausgebildet ist. Um Redundanzen zu vermeiden, werden die übrigen Elemente, welche bereits in Figur 2 beschrieben wurden, nicht nochmals ausgeführt. In beiden Fällen spannt die Vorspanneinrichtung bevorzugt den Lagerinnenring der jeweiligen Lauf- bzw. Führungsrollen gegenüber dem Träger 26 vor.

Die Anmelderin behält sich vor sämtliche in den Anmeldeunterlagen offenbarte Merkmale als erfindungswesentliche zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Kurvenlaufbahnführung
- 2a: Lauffläche
- 4: Nutkurve
- 10: Behältnisse
- 20: Transporteinheit
- 22: Führungsrolle
- 24: Führungsrolle
- 26: Rollenträger
- 28: Vorspanneinrichtung
- 30: Feder
- 32: elastisches Element/ Elastomer
- 40: Erwärmungseinrichtung
- 42: Zuführeinrichtung
- 44: Umformungseinrichtung
- 46: Umformungseinheit
- 48: Abführeinrichtung
- 50: Reinraum
- 52: Übergabeeinrichtung
- 54: Fülleinrichtung/Etikettiereinrichtung
- D: Drehachse
- P: Transportpfad

## Patentansprüche

1. Vorrichtung (1) zum Behandeln von Behältnissen (10) mit einer Transporteinheit (20), welche dazu geeignet und bestimmt ist die Behältnisse (10) entlang eines vorgegeben Transportpfades (P) zu transportieren, wobei die Transporteinheit (20) wenigstens eine Kurvenlaufbahnführung (2) aufweist, welche sich wenigstens abschnittsweise entlang des Transportpfades (P) der Behältnisse (10) erstreckt, und wobei die Vorrichtung (1) wenigstens eine Führungsrolle (22) aufweist, welche dazu geeignet und bestimmt ist, an einer Lauffläche (2a) der Kurvenlaufbahnführung (2) abzurollen, wobei diese Führungsrolle (22) drehbar an einem Rollenträger (26) angeordnet ist, und wobei diese Führungsrolle (22) mittels einer Vorspanneinrichtung (28) gegenüber dem Rollenträger (26) derart vorgespannt ist, dass die Führungsrolle (22) in Richtung der Lauffläche (2a) gedrängt wird, **dadurch gekennzeichnet, dass** die Vorspanneinrichtung (28) direkt in einer Befestigungsachse, mit welcher die Führungsrolle (22) an dem Rollenträger (26) befestigt ist, integriert ist und innerhalb eines Lagerinnenrings der Führungsrollen (22) angeordnet ist.

2. Vorrichtung (1) nach Anspruch 1,
**dadurch gekennzeichnet, dass**
durch die Vorspannung ein entstehendes Spiel zwischen der Lauffläche (2a) und der Führungsrolle (22) ausgeglichen wird.

3. Vorrichtung (1) nach Anspruch 1,
**dadurch gekennzeichnet, dass**
die Kurvenlaufbahnführung (2) eine Nutkurve (4) aufweist, innerhalb derer die Führungsrolle (22) geführt wird.

4. Vorrichtung (1) nach wenigstens einem der vorangegangenen Ansprüche,
**dadurch gekennzeichnet, dass**
die Vorrichtung (1) wenigstens zwei übereinander drehbar gegenüber dem Rollenträger angeordnete Führungsrollen (22, 24) aufweist.

5. Vorrichtung (1) nach dem vorangegangenen Anspruch,
**dadurch gekennzeichnet, dass**
die Führungsrollen (22, 24) unabhängig voneinander gegenüber dem Träger drehbar sind.

6. Vorrichtung (1) nach wenigstens einem der vorangegangenen Ansprüche 3 - 5,
**dadurch gekennzeichnet, dass**
wenigstens eine Laufrolle (22) vorgespannt und wenigstens eine Laufrolle (24) starr ausgebildet ist und wenigstens eine vorgespannte Laufrolle (22) auf einer starren Laufrolle (24) angeordnet ist.

7. Vorrichtung (1) nach wenigstens einem der vorangegangenen Ansprüche,
**dadurch gekennzeichnet, dass**
die Vorspannung der Laufrolle (22) mittels einer Feder erreicht wird und/oder die Vorspannung der Laufrolle (22) mittels eines elastischen Elements, welches sich von einer Feder unterscheidet erreicht wird, wobei das elastische Element ein Elastomer ist.

8. Vorrichtung (1) nach wenigstens einem der vorangegangenen Ansprüche,
**dadurch gekennzeichnet, dass**
die Laufrolle (22) im ständigen Kontakt mit der Kurvenlaufbahn (2) steht.

9. Verfahren zum Behandeln von Behältnissen (10), wobei die Behältnisse mit einer Transporteinheit (20) entlang eines vorgegebenen Transportpfades (P) transportiert werden, wobei die Transporteinheit (20) wenigstens eine Kurvenlaufbahnführung (2) aufweist, welche sich wenigstens abschnittsweise entlang des Transportpfades (P) der Behältnisse (10) erstreckt, wobei wenigstens eine Führungsrolle (22) an einer Lauffläche (2a) der Kurvenlaufbahnführung (2) abrollt, wobei diese Führungsrolle (22) drehbar an einem Rollenträger (26) angeordnet ist, und wobei diese Führungsrolle (22) mittels einer Vorspanneinrichtung (28) gegenüber dem Rollenträger (26) derart vorgespannt wird, dass die Führungsrolle (22) in Richtung der Lauffläche (2a) gedrängt wird, **dadurch gekennzeichnet, dass** die Vorspanneinrichtung (28) direkt in einer Befestigungsachse, mit welcher die Führungsrolle (22) an dem Rollenträger (26) befestigt ist, integriert ist und innerhalb eines Lagerinnenrings der Führungsrollen (22) angeordnet ist.

## Claims

1. Apparatus (1) for treating containers (10), having a transport unit (20) which is suitable and intended for transporting the containers (10) along a predetermined transport path (P), wherein the transport unit (20) has at least one curved track guide (2) which extends at least in sections along the transport path (P) of the containers (10), and wherein the apparatus (1) has at least one guide roller (22) which is suitable and intended to roll on a running surface (2a) of the curved track guide (2), wherein this guide roller (22) is arranged rotatably on a roller carrier (26),
and wherein
this guide roller (22) is preloaded by means of a preloading device (28) with respect to the roller carrier (26) in such a way that the guide roller (22) is urged in the direction of the running surface (2a),
**characterized in that**
the preloading device (28) is directly integrated in a fastening axis with which the guide roller (22) is fastened to the roller carrier (26) and is arranged within a bearing inner ring of the guide rollers (22).

2. Apparatus (1) according to claim 1,
**characterized in that**
the preload compensates for any play that occurs between the running surface (2a) and the guide roller (22).

3. Apparatus (1) according to claim 1,
**characterized in that**
the curved track guide (2) has a grooved curve (4) within which the guide roller (22) is guided.

4. Apparatus (1) according to at least one of the preceding claims,
**characterized in that**
the apparatus (1) has at least two guide rollers (22, 24) arranged one above the other rotatably relative to the roller carrier.

5. Apparatus (1) according to the preceding claim,
**characterized in that**
the guide rollers (22, 24) are rotatable independently of each other relative to the carrier.

6. Apparatus (1) according to at least one of the preceding claims 3-5,
**characterized in that**
at least one guide roller (22) is preloaded and at least one guide roller (24) is rigid, and at least one preloaded guide roller (22) is arranged on a rigid guide roller (24).

7. Apparatus (1) according to at least one of the preceding claims,
**characterized in that**
the preload of the guide roller (22) is achieved by means of a spring and/or the preload of the guide roller (22) is achieved by means of an elastic element different from a spring, wherein the elastic element is an elastomer.

8. Apparatus (1) according to at least one of the preceding claims,
**characterized in that**
the guide roller (22) is in constant contact with the curved track guide (2).

9. Method for treating containers (10), wherein the containers are transported along a predetermined transport path (P) by means of a transport unit (20), wherein the transport unit (20) comprises at least one curved track guide (2) which extends at least in sections along the transport path (P) of the containers (10), wherein at least one guide roller (22) rolls on a running surface (2a) of the curved track guide (2), wherein this guide roller (22) is arranged rotatably on a roller carrier (26),
and wherein
this guide roller (22) is preloaded by means of a preloading device (28) with respect to the roller carrier (26) in such a way that the guide roller (22) is urged in the direction of the running surface (2a),
**characterized in that**
the preloading device (28) is directly integrated in a fastening axis with which the guide roller (22) is fastened to the roller carrier (26) and is arranged within a bearing inner ring of the guide rollers (22).

## Revendications

1. Dispositif (1) destiné à traiter des récipients (10) avec une unité de transport (20), laquelle est adaptée pour et se destine à transporter les récipients (10) le long d'une voie de transport (P) spécifiée, dans lequel l'unité de transport (20) présente au moins un guidage de trajectoire en virage (2), lequel s'étend au moins par endroits le long de la voie de transport (P) des récipients (10), et dans lequel le dispositif (1) présente au moins un galet de guidage (22), lequel est adapté pour et se destine à rouler sur une surface de roulement (2a) du guidage de trajectoire en virage (2), dans lequel ledit galet de guidage (22) est disposé de manière à pouvoir tourner sur un support de galet (26),
et dans lequel
ledit galet de guidage (22) est précontraint au moyen d'un système de précontrainte (28) par rapport au support de galet (26) de telle manière que le galet de guidage (22) est poussé en direction de la surface de roulement (2a),
**caractérisé en ce que**
le système de précontrainte (28) est intégré directement dans un axe de fixation, avec lequel le galet de guidage (22) est fixé sur le support de galet (26), et est disposé à l'intérieur d'une bague intérieure de palier des galets de guidage (22).

2. Dispositif (1) selon la revendication 1,
**caractérisé en ce que**
un jeu se formant entre la surface de roulement (2a) et le galet de guidage (22) est compensé par la précontrainte.

3. Dispositif (1) selon la revendication 1,
**caractérisé en ce que**
le guidage de trajectoire en virage (2) présente une came de rainure (4), à l'intérieur de laquelle le galet de guidage (22) est guidé.

4. Dispositif (1) selon au moins l'une quelconque des revendications précédentes,
**caractérisé en ce que**
le dispositif (1) présente au moins deux galets de guidage (22, 24) disposés l'un au-dessus de l'autre de manière à pouvoir tourner par rapport au support de galet.

5. Dispositif (1) selon la revendication précédente,
**caractérisé en ce que**
les galets de guidage (22, 24) peuvent être tournés indépendamment les uns des autres par rapport au support.

6. Dispositif (1) selon au moins l'une quelconque des revendications précédentes 3 - 5,
**caractérisé en ce que**
au moins un galet de roulement (22) est précontraint et au moins un galet de roulement (24) est réalisé de manière rigide et au moins un galet de roulement (22) précontraint est disposé sur un galet de roulement (24) rigide.

7. Dispositif (1) selon au moins l'une quelconque des revendications précédentes,
**caractérisé en ce que**
la précontrainte du galet de roulement (22) est atteinte au moyen d'un ressort et/ou la précontrainte du galet de roulement (22) est atteinte au moyen d'un élément élastique, qui se distingue d'un ressort, dans lequel l'élément élastique est un élastomère.

8. Dispositif (1) selon au moins l'une quelconque des revendications précédentes,
**caractérisé en ce que**
le galet de roulement (22) est en contact permanent avec la trajectoire en virage (2).

9. Procédé de traitement de récipients (10), dans lequel les récipients sont transportés avec une unité de transport (20) le long d'une voie de transport (P) spécifiée, dans lequel l'unité de transport (20) présente au moins un guidage de trajectoire en virage (2), lequel s'étend au moins par endroits le long de la voie de transport (P) des récipients (10), dans lequel au moins un galet de guidage (22) roule sur une surface de roulement (2a) du guidage de trajectoire en virage (2), dans lequel ledit galet de guidage (22) est disposé de manière à pouvoir tourner sur un support de galet (26),
et dans lequel
ledit galet de guidage (22) est précontraint au moyen d'un système de précontrainte (28) par rapport au support de galet (26) de telle manière que le galet de guidage (22) est poussé en direction de la surface de roulement (2a),
**caractérisé en ce que**
le système de précontrainte (28) est intégré directement dans un axe de fixation, avec lequel le galet de guidage (22) est fixé sur le support de galet (26), et est disposé à l'intérieur d'une bague intérieure de palier des galets de guidage (22).
